# EUROPEAN PATENT SPECIFICATION

(11) **EP 2 456 918 B1**
(45) Date of publication and mention of the grant of the patent: **24.08.2016**
(21) Application number: 10735007.6
(22) Date of filing: 22.07.2010
(51) Int. Cl.: D07B 5/00, A01K 75/00, D07B 1/16, D07B 1/18

(54) **METHOD OF MANUFACTURING A LOWER DRAG HELIX ROPE FOR PELAGIC TRAWLS**
VERFAHREN ZUM HERSTELLEN EINE SEILS MIT EINER SPIRALFÖRMIGER OBERFLÄCHE FÜR DIE HOCHSEEFISCHEREI
MÉTHODE DE FABRICATION D'UNE CORDE AVEC UNE SPIRALE SUR LA SURFACE POUR LES CHALUTS PÉLAGIQUES

(30) Priority: 22.07.2009 US 271505 P; 07.08.2009 US 273703 P
(43) Date of publication of application: 30.05.2012
(60) Divisional application: 13176751.9
(73) Proprietor: Hampidjan HF, 104 Reykjavik (IS)
(72) Inventor: ERLENDSSON, Hjortur, IS-104 Reykjavík (IS)
(74) Representative: Arnason Faktor
(86) International application number: PCT/EP2010/060663
(87) International publication number: WO 2011/009924

(56) References cited:
- WO-A1-03/054291
- WO-A2-01/35729
- WO-A2-2004/020732
- FR-A- 438 605
- FR-A- 1 248 116
- US-A- 3 415 919
- US-A- 3 884 173
- US-A- 3 975 980
- US-A- 5 152 130
- US-A1- 2005 160 656
- MCKENNA H A ET AL: "Handbook of fibre rope technology", 1 January 2004 (2004-01-01), HANDBOOK OF FIBRE ROPE TECHNOLOGY; [WOODHEAD PUBLISHING IN TEXTILES], WOODHEAD PUBLISHING LTD, ENGLAND, PAGE(S) 12,215 - 223, XP002599563, ISBN: 978-1-85573-606-1 the whole document

## Description

### Technical Field

The present disclosure relates generally to the technical field of ropes and more particularly to ropes used in forming pelagic mesh in pelagic trawls where such ropes are formed from a strength member core surrounded by a braided sheath wherein the braided sheath is formed of several strands and one of the strands is significantly larger than the other strands so as to form a series of cambered sections capable of either or both causing lift and reducing drag when such rope is subjected to water flow about the rope in a position that corresponds to a position assumed by ropes used in forming pelagic trawl mesh in pelagic trawls. Such ropes are known as "helix ropes".

### Background Art

Pelagic trawls include trawls used to catch Alaska Pollock, blue whiting, capelin, herring, mackerel, pearlside, hoki, hake and other fish species. Pelagic trawls have their pelagic mesh formed mainly of ropes. Pelagic mesh in a pelagic trawl is mesh having a mesh size that is four meters (4 m) and greater. A main problem in the pelagic trawl fishing industry and the pelagic trawl net manufacturing industry is high operational costs minimizing profitability. Price competition is severe and thus high cost and high quality ropes such as ropes used in climbing applications, yachting applications and seismic applications, to name a few are not feasible for use in forming the pelagic mesh of pelagic trawls because the pelagic mesh are constantly damaged and replaced, and require replacement even when not damaged as they are made as thin and as light as possible in order to minimize drag and concurrent fuel consumption, and thus are worked at high loads relative to break points and therefore fail rather quickly. For this reason, more costly coverbraided (including "overbraided") ropes, as opposed to braid jacketed twines used in small mesh netting of say lesser than six hundred millimeters (600 mm), are not favored for forming the pelagic mesh of pelagic trawls. Indeed, considering the world wide pelagic trawl industry as a whole, it is a fact that it is contrary to the state of the art and against the trend in the industry to design and form the pelagic mesh portion of pelagic trawls from coverbraided ropes.

Due to the severe price competition, presently the vast majority of pelagic trawls have their pelagic mesh portion formed of non-jacketed braided or twisted twines. These are low cost to produce, low cost to replace, and easy to splice. It is important that the ropes be easy to splice as splicing has become the dominant form of connecting front part mesh in pelagic trawls as it is much stronger than knotting and also much lower in drag than knotting, allowing much lowered manufacture costs as well as lowered drag and concurrent lowered fuel consumption. The difficulty in splicing coverbraided ropes and especially in splicing tightly coverbraided ropes such as helix ropes is another reason that coverbraided ropes have lost favor among pelagic trawl manufacturers and end users.

One of the main problems caused by the fact that coverbraided ropes are largely out of favor in forming the pelagic mesh portion of pelagic trawls is that the most easily handled and in fact the preferred variant of self spreading meshed trawls employ a coverbraid in the self spreading rope construction and it is self spreading trawls that have the lowest environmental impact of all pelagic trawl constructions. Thus, it is important to increase market demand for self spreading trawls in order to increase the use of low environmental impact pelagic trawls. Ultimately, it is catch per unit effort that is most important to fishing company customers, so newer and better self spreading rope constructions for self spreading trawls must better some factor that the bettering of which improves the catch per unit effort. Likewise, if market demand is to be increased for such self spreading trawls that is pelagic trawls that have the lowest environmental impact of any type of pelagic trawl, such self spreading trawls must increase the catch per unit effort.

The main factor in improving catch per unit effort of pelagic trawls at the rope level is to reduce the drag of a rope at angles of attack found in the pelagic netting portions of pelagic trawls and consequently the drag of a pelagic trawl. The reduced drag concurrently reduces fuel consumption, and also can increase trawl opening. Either or both lead to increased catch per unit effort, and thus lead to increased customer acceptance and demand.

Helix ropes, as defined above and also further defined herein, are used in self spreading pelagic trawls known as "Helix Trawls" manufactured and sold by Hampidjan HF of Iceland. The original teaching of such helix ropes is contained within now Published Patent Cooperation Treaty (PCT) International Publication No. WO/1998/046070, International Application No. PCT/US1998/007848 (see FIG. 29), and a latter teaching of such helix ropes also is contained within now Published Patent Cooperation Treaty (PCT) International Publication No. WO 03/081989 A2, International Application No. PCT/US03/10114 (see FIG. 6). Helix ropes, and the "Helix Trawls" manufactured by Hampidjan HF of Iceland, have acquired a reputation of exhibiting excessively greater drag than modern, state of the art cordage used to form other pelagic trawl nets and especially non-self spreading pelagic trawl nets in the present state of the art. The increased drag concurrently results in smaller trawl openings, reduced towing speed and increase fuel consumption at given tow speeds. For this reason the use of helix ropes to form self spreading trawls such as Helix Trawls has lost favor among fishing entities, despite the fact that they offer other favorable properties, such as eliminating by-catch of marine mammals that would otherwise be caught in non-self spreading trawls when the back end of such non-self spreading trawls collapses around and the marine mammals, enhanced ability to selectively fish as the trawls do not collapse, and other. Problematically, it is the helix ropes that also are the preferred form of a self spreading rope for forming a self spreading pelagic trawl because they are the most reliable embodiment of a self spreading rope useful for forming a self spreading pelagic trawl, other embodiments having lost favor and no longer being in use.

US 2005/0160656 A1 is considered to represent the closest prior art with respect to the present invention and constituting the features in the preamble of independent claim 1. US3884173 discloses to provide one or more radially extending ridges in a spiral fashion onto existing cables for fairing purposes.

Beyond the highly favorable environmental factors of helix rope formed pelagic trawls, there are other instances when helix rope formed pelagic trawls are highly useful. These include in slow trawl speed applications, and in quick turning applications at deep depths with much warp out, as in these circumstances the self spreading properties of self spreading trawls prevents the trawls from collapsing, thereby not only preventing by-catch of marine mammals and enhancing selective fishing, but also maintaining the trawl fishing the selected species for greater portion of the time. So, where such operational conditions prevail it is favorable to the final catch per unit effort equation to employ even the presently known higher drag and higher cost self spreading trawls formed of the helix rope. However, these circumstances are not the norm, but rather the exception, and in such cases the greater fuel consumption of such trawls is not favored, but rather tolerated and it remains that lowering drag and concurrently lowering fuel consumption is a most important factor in increasing customer demand for such environmentally positive trawls.

Thus, it can readily be appreciated that it is important to reduce the drag of helix ropes so as to reduce the drag of pelagic trawls formed of such helix ropes in order to once again generate favor among fishing entities to use the low environmental impact self spreading trawls that also greatly enhance marine mammal safety and permit more selective fishing, while concurrently reducing fuel consumption per unit of fish caught.

To further describe a helix rope: a helix rope is a type of a "coverbraided" rope, the term "coverbraided" rope also known herein and in the industry as "overbraided" rope. The cover or sheath is formed by a braided sheath that is itself formed of strands. What distinguishes a helix rope from any other type of tightly coverbraided rope useful in forming pelagic mesh in pelagic trawls is that in a helix rope one of the strands forming the braided sheath is substantially larger than the other strands forming the braided sheath.

### Disclosure

It is an object of the present disclosure to provide for a process for forming a helix rope that is useful for forming pelagic mesh in pelagic trawls that has lesser drag when subjected to water flow at trawl mesh angles of attack than known helix ropes.

Another object of the present disclosure is to provide for a process for forming a helix rope that is useful for forming pelagic mesh in pelagic trawls and that is stronger than known constructions of helix rope.

Possessing the preceding advantages, the methods of the present disclosure answer needs long felt in the industry.

These and other features, objects and advantages are likely to be understood or apparent to those of ordinary skill in the art from the following detailed description of the preferred embodiment as illustrated in the various drawing figures.

### Brief Description of the Drawings

FIG. 1 is a plan view of a helix rope in accordance with the present disclosure that reveals various layers included in one embodiment thereof;
FIG. 2 is a cross sectional view depicting a construction of one of the strands forming the braided sheath of the helix rope of FIG. 1;
FIG. 3 and FIG. 4 are cross sectional views of sub-strands forming the strand of FIG. 2; and FIGS. 5 through 11 are cross sectional views of various embodiments of the helixing strand 36 shown in FIG. 1.

### Best Mode for Carrying Out the Disclosure

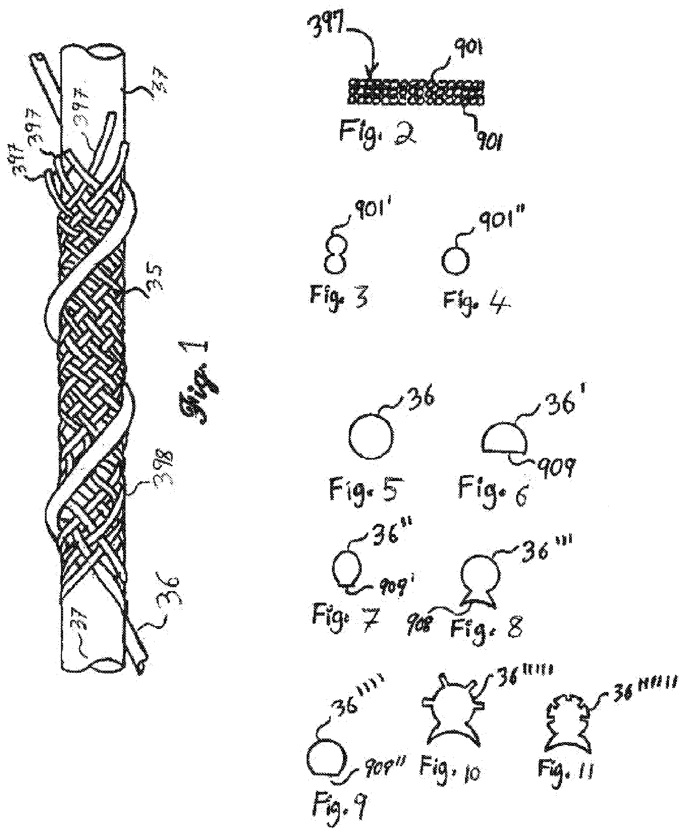

FIG. 1 illustrates a helix rope in accordance with the present disclosure that is identified by the general reference character 35. In reference to FIG. 1, the helix rope 35 of the present disclosure includes a braided sheath 398 formed about a strength member core 37. The braided sheath 398 is formed of multiple strands 397 and at least one helixing strand 36. The helixing strand 36 is situated mainly about the outside of the braided sheath 398, such as when helixing strand 36 is formed of a substance such as polyurethane and adhered mainly to the outside of braided sheath 398.

Ideally, the strands 397 are not circular in cross section, but are flattened, such as a tape (see Fig. 2), with a minimal thickness and a maximum width. The aspect ratio of the flattened strand 397 can be from 50:1 to 2:1, with from 2:1 to 12:1 being presently used, with at least 3: 1, 4: 1, 5: 1, 6:1, 7:1 and 8:1 being preferred. This requires that each strand 397 is itself formed of at least two, and up to at least two hundred, individual linear elements (hereinafter "sub-strands") 901 that themselves are either fibers and/or filaments, or are plaits of fibers and/or filaments (see FIG. 3 and FIG. 4). Presently, each strand 397 is preferably formed of for example, three sub-strands for a smaller diameter helix rope, up to ten sub strands for a larger diameter helix rope, with at least two to three sub-strands for helix ropes of a diameter (herein including "equivalent diameter") of lesser than nine mm being presently preferred, and with at least three to five sub-strands for helix ropes of a diameter greater than nine mm being presently preferred. The term "equivalent diameter" shall mean the diameter a rope would be if it was a rope having a circular cross section, when measured with about 5 Kg of tension, say 4 to 5.5 Kg of tension. This can be calculated by measuring the volumetric displacement of a rope, and applying that to a cylindrical form, in order to arrive at the cylinder's diameter.

The thickness of the braided sheath 398's wall is preferentially less than one millimeter, and may be up to two millimeters.

In order to optimize the flattened form of each such strand 397, the multiple individual sub-strands 901 either are laid parallel to one another or are loosely laid (i.e. twisted) about one another so as to result, after being braided about the strength member core 37, in the flattened tape-like shape mentioned above. Presently, parallel laid is the preferred embodiment. The sub-strands themselves either can be parallel laid or twisted plaits and formed either of further sub-sub-strands or of individual filaments and/or fibers.

As shall be readily apparent to those skilled in the art upon having read the instant disclosure, the exact count of the sub-strands 901 to form strands 397 forming the braided sheath of any particular helix rope of the present disclosures is determined by several factors, primarily being:
a) a diameter of strength member core 37 that forms the core about which the braided sheath is formed;
b) a desired thickness of the braided sheath;
c) a desired pick-angle and corresponding constructional elongation ability of the braided sheath;
d) a desired strength and elasticity of the braided sheath in relation to the strength and elasticity of the strength member core 37 forming the core; and
e) a selected filament and/or fiber type for forming the strands and/or sub-strands.

Experimentation with any carrier count and strand count, for any particular braiding machinery, taking into account at least the above factors shall allow those skilled in the art to determine whether the sub-strands 397 are better laid parallel to one another or loosely twisted, and to what degree to twist them if they are to be twisted, i.e. what pitch they are best twisted at.

For example, for a roughly ten to twelve millimeter diameter helix rope of a minimal strand count according to the known art, each strand is formed of three parallel yarns, and each of the yarns has six monofilaments within it that are twisted rather loosely. The looseness of the twist is selected so that the monofilaments in the yarn can move relative to one another so as to permit the yarn to form a flattened shape to the yarn when the braided sheath is formed. The monofilaments may be of circular cross section 901" as illustrated in FIG. 4, or may be of a "side-by-side" cross sectional configuration 901' as illustrated in FIG. 3. One skilled in the art can begin with this formula, and upon having read the information contained within the instant disclosure, empirically derive a suitable strand construction for use in forming any diameter of any helix ropes of the present disclosure, it being the practice in the art to empirically derive any rope construction formulas to fit any particular fabrication plant's particular braiding machinery, twisting machinery, filament type, tension applied to carrier strands, diameters and other characteristic of the components, machinery and methods in forming a certain rope.

Most ideally, those sub-strands that pack better, i.e. result in minimal void space and preferentially no void space between the sub-strands, as well as between the strands themselves that form the braided sheath, are preferable for a given strength. Various conventional sub-strands having asymmetrical cross sections that also are sufficiently strong while packing better than circular cross sectional shaped sub-strands 901 are useful.

Ideally, the sub-strands forming the strands 397 that in turn form the braided sheath 398 have minimal and preferably no void space between one another. For maximal abrasion resistance and aesthetic acceptance by end users, ideally each of the strands 397 contact adjacent strands 397, so that portions of strength member core 37 or portions of whatever is enveloped by the braided sheath is not discernible by an unaided healthy human eye.

For a superior drag reducing embodiment, at least some diameters of helix rope of the present disclosure including approximately sixteen mm and eighteen mm diameters have been found to have a lowest drag when void space exists between adjacent strands forming the braided sheath, so that what is enveloped by the braided sheath is discernible by an unaided healthy human eye. In such embodiments it is still preferable that the helix rope of the present disclosure has minimal, including no void space between sub-strands forming the strands making up the braided sheath.

To assist this preferred construction of the sub-strands and strands, a type of monofilament shown in Fig. 4, indicated by reference numeral 901' and known as "glued together" or "side by side" monofilament, is highly useful and presently preferred. Such monofilaments are made by extruding two circular cross section monofilaments from dies that are situated very close to one another so that prior to the filaments fully drying the adjacent filaments adhere to one another, forming a monofilament of a roughly figure eight cross section.

However, when such "side by side" monofilament strands are not available, presently circular cross sectional shaped sub-strands 901" shown in Fig. 4 as well are highly useful, most commonly used and are one form of the preferred embodiment.

Polyethylene and various forms of high tenacity polyethylene are useful, and any hydrophobic substances are preferred for lower drag applications than hydrophilic substances for forming the braided sheath and the strands and sub-strands. In certain applications and especially in high abrasion applications nylons and other hydrophilic substances are useful.

A helix rope of the present invention is made with the helixing strand 36 adhered to the outside surface of the braided sheath. The helixing strand 36 forms cambered sections in the helix rope when appropriate cross sectional shapes are selected for helixing strand 36.

This is accomplished by applying a bead line of a flowable material, such as a semi-liquid material, that hardens into a helixing strand 36 that is sufficiently rigid and durable to tolerate the conditions of a commercial pelagic trawl net's use.
In continued reference to FIG. 1:
A presently preferred method for forming a helix rope of the present disclosure by adhering a helixing strand 36 to the outside surface of the braided sheath 398 is to situate besides a length of coverbraided rope a polyurethane blending machine having an injection head constructed, configured and constructed to provide the desired cross sectional shape for the helixing strand 36. The length of coverbraided rope can be formed from a conventional coverbraided rope. The injection head is positioned adjacent to the outside surface of the length of rope. The rope is being fed out from a pay out spool while simultaneously being taken up on a take up spool. Both the pay out spool and the take up spool are turning in synchronization governed by gears and/or electronics so as to cause the length of rope in between them to rotate about its longitudinal axis, preferably without imparting any twist or rotation into the rope itself.

Near the pay out spool there is a die to stabilize the length of the rope between the two spools. The injection head is located at the downstream end of this die. Downstream of the injection head the rope passes through an linearly shaped oven of about ten meters in length, with the take up spool located downstream of the oven.

As the polyurethane bead is deposited onto the rotating surface of the rope, the speed of rotation is selected so that the centrifugal pull of the rotation helps the bead maintain its relief over and above the rope's outside surface. Passing through the oven, sufficient heat is applied in sufficient lack of humidity so as accelerate adherence of the polyurethane blended material to the outside surface of the rope and also to cause the bead of blended polyurethane to dry in the oven and prior to being taken up on the take up spool.

Substances that accelerate the setting (herein including "drying") of the polyurethane material, as are conventionally known in the art, are selected for use with and in the polyurethane blending machine. That is, such substances are blended with the polyurethane just prior to the bead being applied to the outside surface of the rope of the present disclosure, resulting in another preferred embodiment of Helix rope of the present disclosure.

Additionally, substances that reduce drag and/or increase lift of the helix rope of the present disclosure, and that increase the elasticity of resultant helixing strand 36, increase its abrasion tolerance, and resistance to degradation by elements such as light, heat, cold and salt water can be added to the semi liquid bead prior to its being deposited onto the outside surface of the rope. Furthermore, substances that affect its affinity to water, such as silicon or Teflon, or in certain applications substances that enhance its affinity to water, can be sprayed onto the bead forming helixing strand 36 prior to, just prior to or after setting of the bead, depending upon the exact material used in the bead and the exact substance being added.

The elasticity of the material forming the bead forming helixing strand 36 is selected so that the helixing strand 36 is at least as elastic as the remainder of the helix rope itself. However, more preferably the elasticity of helixing strand 36 is sufficiently greater than the elasticity of the remainder of such helix rope itself, as well as sufficiently greater than the elasticity of the strands 397 forming the braided sheath 398 so that at maximal elasticity of the helix rope the helixing strand 36 is at less than 80% of its elasticity prior to break point.

The internal shape of the injector head's nozzle largely determines the cross sectional shape of the polyurethane (or other) helixing strand formed in using this injection head method described above. While circular cross sections for helixing strand 36 as shown in Fig. 5 are highly useful, it can be more difficult to strongly adhere them to the surface of the braided sheath, and such a helixing strand does not form part of the claimed invention. FIGS. 6 to 11 show cross-sectional forms for helixing strands 36, indicated by reference numerals 36' to 36""", that provide for a greater adherence surface area 908 for contacting the external surface of the braided sheath, that cross section of the helixing strands of FIGS. 6 to 11 being asymmetrical. The cross sectional shape of helixing strand 36'" of FIG. 8, having adherence surface 908, is presently preferred. For the purpose of the present claimed invention a cross sectional shaped helixing strand 36 having a portion of its cross sectional shape expanded so as to provide a greater surface area for adherence to the external surface of the braided sheath, as taught in FIGS. 8 to 11 , is known as a "footed shape". The presently preferred footed shape is that shown in FIG. 8, which is in its majority the greater part of a circular shaped cross section that is attached to a footed shape, and preferentially to a cambered footed shape. The radius of the arc of cambered surface 908 is preferentially one that matches the radius of the arc of any braided sheath and/or exterior surface of a rope upon which footed surface 908 is intended to be adhered to. Even flat footed surfaces 909 to 909" of FIGS. 6, 7 and 9 are suitable as the flow-able polyurethane can adapt itself to fit the braided sheath's external surface's shape prior to setting, depending upon how rapidly the semi-liquid bead of polyethylene is dried, for which factors the drying temperature, humidity, concentration and type of accelerants, and the speed of rotation of the rope upon which the bead of polyurethane is being deposited are all taken into account and the optimal values and rates for such are experimentally determined for any particular rope diameter, braided sheath surface, intended volume of helixing strand 36, relative affinity to water and/or oil of the braided sheath, and polyurethane material, as shall be readily apparent to those skilled in the art upon having read the instant disclosure.

FIGS. 10 and 11 show alternative cross sectional shapes of helixing strand 36 intended to minimize drag and/or maximize lift, as indicated by reference numerals 36""' and 36""".

In order to use the helix rope of the present disclosure to form a lowered drag self spreading trawl it is needed to:
(a) form as much of the pelagic mesh of the trawl as possible from the helix rope of the present disclosure; and
(b) position the helix rope of the present disclosure in such a fashion that it has a particular orientation relative to the exterior of the trawl and also relative to the long dimension of the trawl. More particularly, the helix rope of the present disclosure is used to form mesh bars and/or mesh legs of the trawl where helix ropes 35 having either right handed or left handed lay orientations for the helixing strand are selected and positioned so that when viewed from external at least the top and sides of the trawl, and in the instances of a pure midwater trawl that shall not be fished in bottom contact when viewed from all sides of the trawl, with the mesh legs and/or mesh bars at intended angles of attack and intended percentages of mesh opening, the cambered sections of that portion of each helix rope that is external the trawl are able to generate lift vectors having greater magnitudes normalized to the long dimension of the trawl and directed away from the interior of the trawl compared to the lift vector magnitudes directed toward the long axis of the trawl and able to be generated by those cambered sections that are on the portions of the helix ropes internal the trawl. In other words, those cambered sections on the portion of the helix ropes that are external the trawl are more parallel to the intended oncoming water flow and/or to the planned long dimension of the trawl than are the cambered sections of each helix rope that are internal the trawl. Another way of describing such orientation for helix ropes of the present disclosure to best be used to form a lowered drag self spreading trawl is that when viewed from a position both external the trawl as well as looking from the mouth of the trawl toward the aft of the trawl, those helix ropes 35 having right handed lays for their helix strand have their leading edges being the left side of each such helix rope, while those helix ropes 35 having left handed lays for their helix strand have their leading edges being the right side of such helix ropes.

Other uses for helix ropes of the present disclosure include forming lowered drag pelagic trawls where the lay orientation and/or orientation of the cambered sections of the helix ropes of the present disclosure is not controlled so as to result in a self spreading trawl. One fashion of forming such a lowered drag trawl of the present disclosure is to form all or as much as possible of the pelagic mesh of a trawl from helix ropes 35 where all such helix ropes have the same lay direction for their helixing strand.

It is important that the braid angle and the elasticity of fibers forming both the braided sheath and forming the strength member of either the helix rope are selected so that the braided sheath and the strength member core both experience total failure at the same elongation of the final produced helix rope. For example, when less elastic fibers form the braided sheath, and more elastic fibers form the strength member core rope, the strength member core rope's strands are of a less obtuse braid angle than are the strands forming the braided sheath.

### Industrial Applicability

A helix rope sling of present disclosure as formed by the process taught hereinabove is useful for forming self spreading lowered drag trawls of lowered noise and also for forming lowered drag trawls of lowered noise.

Although the present disclosure has been described in terms of the presently preferred embodiment, it is to be understood that such disclosure is purely illustrative and is not to be interpreted as limiting.

## Claims

1. A method for forming a helix rope (35) for a trawl, the helix rope (35) including a strength member core (37) surrounded by a braided sheath (398), formed of multiple strands (397), the method comprising the steps of:
a) providing a rope having said strength member core (37) and said braided sheath (398);
**characterized by**
b) situating upon a portion of the braided sheath (398) a bead of semi-liquid material that hardens into a helixing strand (36) and forming the helixing strand (36) with a footed shape (908, 909, 909"), namely its cross-sectional shape being asymmetrical having a portion being expanded so as to provide a greater surface area for adherence to the external surface of the braided sheath (398).

2. The method of claim 1, wherein said helixing strand (36) has a cambered footed shape (908).

3. The method of claim 2, wherein the footed shape (908) has a cambered surface (908), said cambered surface (908) matches the radius of the arc of the braided sheath (398) at said portion of the braided sheath (398).

4. The method of claim 1, wherein the braided sheath (398) is formed of multiple strands (397) which are flattened.

5. The method of claim 4, wherein each strand (397) is made of sub-strands (901), that are either laid parallel to one another or are loosely twisted about one another, so as to result, after being braided about the strength member core (37), in the strands (397) having a flattened tape-like shape.

## Patentansprüche

1. Verfahren zum Ausbilden eines Helixseils (35) für ein Schleppnetz, wobei das Helixseil (35) einen Zugelementkern (37) enthält, umgeben von einem geflochtenen Mantel (398), aus mehreren Adern (397) ausgebildet, wobei das Verfahren die folgenden Schritte umfasst:
a) Bereitstellen eines Seils mit dem Zugelementkern (37) und dem geflochtenen Mantel (398);
**gekennzeichnet durch**
b) Anordnen, auf einem Abschnitt des geflochtenen Mantels (398), einer Raupe aus halbflüssigem Material, die zu einer wendelnden Ader (36) härtet, und Ausbilden der wendelnden Ader (36) mit einer mit einem Fuß versehenen Gestalt (908, 909, 909''), wobei nämlich ihre Querschnittsgestalt asymmetrisch ist und einen Abschnitt besitzt, der erweitert ist, um einen größeren Flächeninhalt für das Haften an der externen Oberfläche des geflochtenen Mantels (398) bereitzustellen.

2. Verfahren nach Anspruch 1, wobei die wendelnde Ader (36) eine verjüngte, mit einem Fuß versehene Gestalt (908) besitzt.

3. Verfahren nach Anspruch 2, wobei die mit einem Fuß versehene Gestalt (908) eine verjüngte Oberfläche (908) besitzt, wobei die verjüngte Oberfläche (908) dem Radius des Bogens des geflochtenen Mantels (398) an dem Abschnitt des geflochtenen Mantels (398) entspricht.

4. Verfahren nach Anspruch 1, wobei der geflochtene Mantel (398) aus mehreren Adern (397) gebildet ist, die abgeflacht sind.

5. Verfahren nach Anspruch 4, wobei jede Ader (397) aus Teiladern (901) besteht, die entweder parallel zu einander gelegt sind oder lose umeinander verdrillt sind, um nach dem Flechten um den Zugelementkern (37) die Adern (397) mit einer abgeflachten bandförmigen Gestalt zu ergeben.

## Revendications

1. Procédé de formation d'une corde à hélice (35) pour un chalut, la corde à hélice (35) comprenant un élément central de renforcement (37) entouré d'une gaine tressée (398), formée de brins multiples (397), le procédé comprenant les étapes suivantes :
a) le fait de prendre une corde comportant ledit élément central de renforcement (37) et ladite gaine tressée (398) ;
**caractérisé par**
b) le fait de placer sur une partie de la gaine tressée (398) un cordon de matériau semi-liquide qui durcit de façon à former un brin hélicoïdal (36) et le fait de façonner le brin hélicoïdal (36) de sorte qu'il présente une forme à base (908, 909, 909''), à savoir que sa forme en section transversale soit asymétrique, celle-ci comportant une partie élargie afin de produire une surface plus étendue pour l'adhérence à la surface extérieure de la gaine tressée (398).

2. Procédé selon la revendication 1, dans lequel ledit brin hélicoïdal (36) présente une forme à base incurvée (908).

3. Procédé selon la revendication 2, dans lequel la forme à base (908) comporte une surface incurvée (908), ladite surface incurvée (908) correspondant au rayon de l'arc de la gaine tressée (398) au niveau de ladite partie de la gaine tressée (398).

4. Procédé selon la revendication 1, dans lequel la gaine tressée (398) est constituée de multiples brins (397) qui sont aplatis.

5. Procédé selon la revendication 4, dans lequel chaque brin (397) est composé de sous-brins (901), qui sont soit agencés de manière parallèle les uns vis-à-vis des autres, soit torsadés de manière lâche les uns autour des autres, de telle sorte que, une fois qu'ils ont été tressés autour de l'élément central de renforcement (37), les brins (397) présentent une forme aplatie semblable à un ruban.
